**Europäisches Patentamt**

**European Patent Office**

**Office européen des brevets**

(11) Veröffentlichungsnummer: **0 229 181 B1**

(12) **EUROPÄISCHE PATENTSCHRIFT**

(45) Veröffentlichungstag der Patentschrift: **25.09.91**

(21) Anmeldenummer: **85905943.8**

(22) Anmeldetag: **28.06.85**

(86) Internationale Anmeldenummer:
**PCT/SU85/00057**

(87) Internationale Veröffentlichungsnummer:
**WO 87/00105 (15.01.87 87/01)**

(51) Int. Cl.⁵: **B23P 6/00, C21D 9/30, C21D 5/00**

(54) **VERFAHREN ZUM NEUBELEGEN VON NOCKENWELLEN.**

(43) Veröffentlichungstag der Anmeldung:
**22.07.87 Patentblatt 87/30**

(45) Bekanntmachung des Hinweises auf die
Patenterteilung:
**25.09.91 Patentblatt 91/39**

(84) Benannte Vertragsstaaten:
**DE FR IT SE**

(56) Entgegenhaltungen:
**DE-C- 891 348      GB-A- 859 327**
**SU-A- 430 982      SU-A- 555 022**
**SU-A- 800 212      US-A- 3 419 949**
**US-A- 3 885 291**

**PATENT ABSTRACTS OF JAPAN, vol. 8, no.
279 (C-257)[1716], 20th December 1984; &
JP-A-59 150 016 (NIPPON PISTON RING K.K.)
28-08-1984**

(73) Patentinhaber: **VOLZHSKOE OBIEDINENIE PO
PROIZVODSTVU LEGKOVYKH AVTOMOBILEI
(AVTOVAZ)
ul. Belorusskaya 16**

**Tolyatti, 445633(SU)**

(72) Erfinder: **TIKHONOV, Arkady Konstantinovich
bulvar Kulibina, 2-87
Tolyatti, 445032(SU)**
Erfinder: **KOPYL, Valery Ivanovich
pr. Stepana Razina, 75-5
Tolyatti, 445051(SU)**
Erfinder: **KUZMENKO, Lidia Yakovlevna
bulvar Kurchatova, 4-61
Tolyatti, 445036(SU)**
Erfinder: **IOTOV, Valery Vladimirovich
ul. Voroshilova, 12-213
Tolyatti, 445042(SU)**
Erfinder: **CHUMIKOV, Andrei Borisovich
ul. Mira, 92-100
Tolyatti, 445017(SU)**

(74) Vertreter: **Finck, Dieter et al
Patentanwälte v. Füner, Ebbinghaus, Finck
Mariahilfplatz 2 & 3
W-8000 München 90(DE)**

**Beschreibung**

Die Erfindung betrifft ein Verfahren zur Wiederherstellung von Nockenwellen aus Gußeisen.

Aus der DE-A1-2 922 509 ist es bereits bekannt, Nockenwellen aus Gußeisen durch Gießen herzustellen und ihre Dauerfestigkeit und Verschleißfestigkeit durch eine Badnitrierung zu verbessern. Die Herstellung solcher Nockenwellen umfaßt auch das Richten sowie das Schleifen der Nocken nach dem Härten.

In der Zeitschrift "Avtomobilnaya promyshlennost", Nr. 7, 1983, Seite 23 bis 24 ist die Wiederherstellung von verschlissenen Nockenwellen beschrieben, bei denen die Wellenabschnitte und die Nocken der verschlissenen Nockenwelle abgedreht und auf die Lagerzapfen sowie die Hocken mit Hilfe von Brennern eine gesinterte selbstschmelzende Legierung mit einer Dicke von 2,5 bis 3,0 mm aufgedampft wird. Nach dem Abkühlen werden die so mit Material versehenen Abschnitte der Nockenwelle und Nocken gerichtet und geschliffen.

In dem Buch von V. A. Nalivkin "Zentralisierte Wiederherstellung von Einzelteilen durch automatisches Auftragschweißen und Schweißen", Verlag Privolzhskoe knizhnoe izdatelstvo, Saratov, 1965, Seite 106 bis 107, ist die Wiederherstellung von verschlissenen reparaturwürdigen Nockenwellen beschrieben, bei denen an den abgenutzten Oberflächenbereichen mit Hilfe einer Elektrode Material durch Unter-Pulver-Auftragschweißen aufgetragen wird. Danach werden durch eine Glühbehandlung Spannungen beseitigt, ehe eine mechanische Bearbeitung durch Fräsen, Hobeln und Bohren beginnt. Dabei kann nach dem Glühen erforderlichenfalls ein Richtvorgang vorgesehen werden. Vor einem Fertigschleifen und Feinbohren kann noch ein Härten mit Anlassen oder ein Normalglühen vorgesehen werden. Zur Gewährleistung der erforderlichen Festigkeit des Auftragmetalls an den funktionswichtigen Oberflächen werden aus einer Stahllegierung bestehende Elektroden verwendet. Die zur Verfestigung eingesetzte Wärmebehandlung ist in der Regel eine Hochfrequenzhärtung.

Bei den vorstehend beschriebenen bekannten Verfahren sind Verbrauch und Aufwand an Auftragswerkstoff sehr hoch. Die mechanische Bearbeitung ist äußerst umfangreich und die Verschleißfestigkeit der wiederhergestellten Nockenwelle unzureichend.

Die der Erfindung zugrunde liegende Aufgabe besteht deshalb darin, das Verfahren zur Wiederherstellung von Nockenwellen aus Gußeisen mit verringertem Material- und Arbeitsaufwand durchzuführen und dabei Nockenwellen hoher Qualität zu erhalten.

Diese Aufgabe wird durch ein Verfahren zur Wiederherstellung von Nockenwellen aus Gußeisen mit abgenutzten Nocken gelöst, bei welchem nur auf die Nocken, deren Abnutzung in der Verschleißzone größer als $(C_1-C_2)/2$ ist, wenn $C_1$ das Grundmaß eines Nockens der neuen Nockenwelle und $C_2$ ein Reparaturmaß des Nockens der wiederhergestellten Nockenwelle ist, in der Verschleißzone mit einer Stahlelektrode unter Schutzgas ein Auftrag aufgeschweißt wird, der größer ist als das Reparaturmaß, nach der Auftragschweißung die Nockenwelle 3 bis 3,5 h bei einer Temperatur von 600 bis 610 °C zur Beseitigung von Spannungen wärmebehandelt und danach abkühlen gelassen wird, nach der Wärmebehandlung die Nockenwelle gerichtet wird, nach dem Richten alle Nocken auf das Reparaturmaß geschliffen werden, nach dem Schleifen die Nockenwelle zur gleichmäßigen Verfestigung nitriert wird und abschließend ein zusätzliches Richten der Nockenwelle vorgenommen wird.

Es hat sich gezeigt, daß der für die erfindungsgemäße Wiederherstellung von Nockenwellen erforderliche Arbeitsaufwand die Hälfte des bei den bekannten Wiederherstellungsverfahren erforderlichen Arbeitsaufwands beträgt. Für die Wiederherstellung der Nockenwellen wird ein minimaler Verbrauch an Zusatzmaterial eingesetzt, wobei die Verbindungszonen zwischen Gußeisen und Stahl fehlerfrei sind. Die Verschleißeigenschaften der Nockenoberflächen entsprechen denen von neuen Nockenwellen.

Anhand von Zeichnungen wird ein Ausführungsbeispiel der Erfindung näher erläutert. Es zeigt:

Fig. 1     in einer Seitenansicht eine wiederherzustellende Nockenwelle;

Fig. 2     im Querschnitt einen Nocken der Nockenwelle mit einer Auftragsschweißung;

Fig. 3     den Nocken von Fig. 2 nach dem Schleifen und

Fig. 4     in einem Schliffbild den Übergang zwischen dem durch Schweißen aufgetragenen Stahl und der Nockenoberfläche aus Gußeisen mit einer Carbonitridschicht.

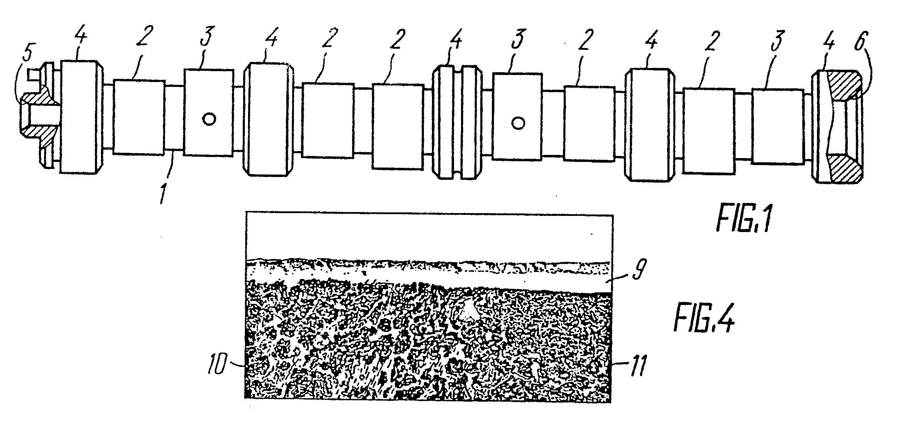

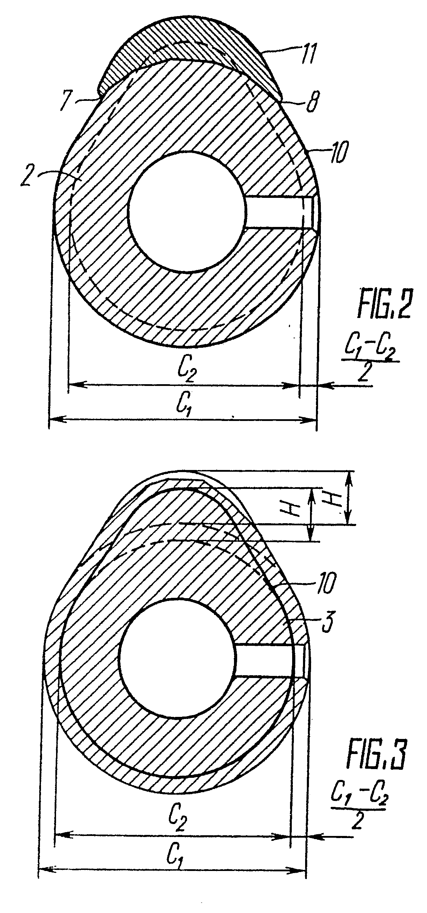

Die in Fig. 1 gezeigte Nockenwelle 1 hat fünf Nocken 2 mit einem über einen zulässigen Grenzwert hinaus um einen Betrag von $(C_1 - C_2)/2$ erfolgten Verschleiß (Fig. 2) sowie drei Nocken 3 mit einem Verschleiß, der geringer ist als der Betrag $(C_1 - C_2)/2$, wenn $C_1$ das Grundmaß eines Nockens einer neuen Nockenwelle und $C_2$ das Reparaturmaß eines Nockens der wiederhergestellten Nockenwelle 1 ist. Die Nockenwelle 1 hat ferner Lagerzapfen 4, die einem gleichmäßigen Verschleiß unterlagen, der 0,03 mm, gewöhnlich 0,01 mm nicht übersteigt. Diese Nockenwelle 1 wird für ihre Wiederherstellung gespült, wonach auf einer Drehbank ihre Mittenfasen 5 und 6 wiederhergestellt werden.

Danach wird mit Hilfe einer halbautomatischen Auftragschweißvorrichtung in der Verschleißzone der fünf Nocken 2, wo der Verschleiß größer ist als $(C_1 - C_2)/2$, wie dies in Fig. 2 dargestellt ist, mit einer Stahlelektrode in einer Schutzgasatmosphäre zwischen dem Punkt 7 und dem Punkt 8 in Fig. 2 ein Auftrag aufgeschweißt. Das Anbringen dieses Auftrags lediglich in den verschlissenen Abschnitten der Nocken 2 gewährleistet einen minimalen Verbrauch an Zusatzmaterial sowie eine minimale Wämezufuhr, wodurch die Plastizität der Nockenwelle 1 aus Gußeisen erhalten bleibt.

Der Verbrauch an Zusatzmaterial bleibt auch dadurch sehr gering, daß die Nocken 3 mit nur geringem Verschleiß keine Auftragschweißung erhalten. Anschließend werden mit Hilfe einer Wärmebehandlung Eigenspannungen, wie sie beispielsweise durch die Induktionshärtung der Nocken bei der Fertigung der neuen Nockenwelle noch vorhanden sind oder wie sie beim Auftragschweißen der Nocken 2 entstehen, entfernt, wofür in einem Schachtofen in einer Schutzgasatmosphäre eine Erhitzung während 3 bis 3,5 h bis auf 600˚ C und eine anschließende Abkühlung durchgeführt wird. Dadurch wird eine Rißbildung in der Verbindungszone zwischen Stahl und Gußeisen der Nocken 2 verhindert. Gleichzeitig wird die Plastizität der Nockenwelle 1 beibehalten, wodurch die durch Richten der Nockenwelle 1 erzielte erforderliche Genauigkeit sichergestellt wird. Für das Richten dient gewöhnlich eine Richtpresse.

Nach dem Richten werden die Nocken 2 und 3 bis auf das Reparaturmaß $C_2$, wie es in Fig. 2 und 3 gezeigt ist, abgeschliffen, wobei das Nockenprofil mit dem Reparaturmaß $C_2$ wieder die konstruktionsbedingte Steigungshöhe H aufweist, so daß motorseitig nach dem Einsatz der wiederhergestellten Nockenwelle keine Zusatzteile erforderlich sind. Das Schleifen der Nocken 2 und 3 erfolgt gewöhnlich auf einem Kopierschleifhalbautomaten.

Anschließend wird die Nockenwelle 1 in einem Schachtofen mit Hilfe eines Ammoniak-Exogas-Gemisches nitriert. Die sich dabei bildende Carbonitridschicht 9 auf der Oberfläche des Nockens 2, wie sie in Fig. 4 gezeigt ist, gewährleistet, daß die Gußeisenoberfläche 10 und die Stahloberfläche 11 gleiche Festigkeitseigenschaften haben. Durch die Nitrierung nehmen die Oberflächenabmessungen aufgrund einer Sättigung mit Kohlenstoff und Stickstoff zu, so daß die Lagerzapfen 4 wieder ihre Ausgangsabmessungen haben.

Zur Beseitigung von beim Nitrieren der Nockenwelle 1 eventuell entstehender Verformungen wird ein abschließendes Richten auf einer Richtpresse durchgeführt.

**Patentansprüche**

1. Verfahren zur Wiederherstellung von Nockenwellen aus Gußeisen mit abgenutzten Nocken, bei welchem

   - nur auf die Nocken (2), deren Abnutzung in der Verschleißzone größer als $(C_1 - C_2)/2$ ist, wenn $C_1$ das Grundmaß eines Nockens (2) der neuen Nockenwelle (1) und $C_2$ ein Reparaturmaß des Nockens (2) der wiederhergestellten Nockenwelle (1) ist, in der Verschleißzone mit einer Stahlelektrode unter Schutzgas ein Auftrag aufgeschweißt wird, der größer ist als das Reparaturmaß,
   - nach der Auftragsschweißung die Nockenwelle (1) 3 bis 3,5 h bei einer Temperatur von 600 bis 610˚ C zur Beseitigung von Spannungen wärmebehandelt und danach abkühlen gelassen wird,
   - nach der Wärmebehandlung die Nockenwelle (1) gerichtet
   - nach dem Richten alle Nocken (2, 3) auf das Reparaturmaß geschliffen werden,
   - nach dem Schleifen die Nockenwelle zur gleichmäßigen Verfestigung nitriert wird und
   - abschließend ein zusätzliches Richten der Nockenwelle (1) vorgenommen wird.

**Claims**

1. A method of reconstructing camshafts of cast iron with worn cams, in which

   - in the worn area, a layer, which is greater than the repaired dimension, is welded with a steel electrode under protective gas only onto those cams (2), the wear of which in the wearing area is greater than $(C_1 - C_2)/2$, when $C_1$ is the basic dimension of a cam (2) of the new camshaft (1) and $C_2$ is a repaired dimension of the cam (2) of the reconstructed camshaft (1),
   - after welding on the layer the camshaft (1) is heat-treated for 3 to 3•5 h at a temperature of 600 to 610˚ C to overcome stresses and is then allowed to cool,
   - after the heat treatment the camshaft (1) is aligned,
   - after the alignment all the cams (2, 3) are ground to the repaired dimension,
   - after the grinding the camshaft is nitrided to a uniform hardening, and
   - finally an additional alignment of the camshaft (1) takes place.

**Revendications**

1. Procédé pour la remise en état d'arbres à cames en fonte ayant des cames détériorées, où

- uniquement sur les cames (2) dont la détérioration dans la zone d'usure est plus importante que $(C_1-C_2)/2$, où $C_1$ est la mesure normale d'une came (2) du nouvel arbre à cames (1) et $C_2$ est la mesure de la réparation de la came (2) de l'arbre à cames (1) remis en état, on soude, dans la zone d'usure, au moyen d'une électrode en acier, sous un gaz protecteur, une couche qui est plus grande que la mesure de la réparation,
- après soudage de la couche, l'arbre à cames (1) est traité à la chaleur pendant 3 à 3,5 heures à une température de 600 à 610°C pour la suppression des tensions et ensuite on le laisse refroidir,
- après traitement thermique, l'arbre à cames (1) est aligné,
- après alignement, toutes les cames (2, 3) sont meulées à la mesure de la réparation,
- après meulage, l'arbre à cames est nitruré pour un durcissement régulier et
- enfin, un alignement supplémentaire de l'arbre à cames (1) est entrepris.

FIG.1

FIG.4

**FIG.2**

$$\frac{C_1 - C_2}{2}$$

**FIG.3**

$$\frac{C_1 - C_2}{2}$$